(19)

Europäisches
Patentamt

European
Patent Office

Office européen
des brevets

(11) **EP 2 374 217 B1**

(12) **EUROPEAN PATENT SPECIFICATION**

(45) Date of publication and mention
of the grant of the patent:
**10.04.2013 Bulletin 2013/15**

(21) Application number: **08875430.4**

(22) Date of filing: **09.12.2008**

(51) Int Cl.:
**H04B 7/00** (2006.01)

(86) International application number:
**PCT/EP2008/067134**

(87) International publication number:
**WO 2010/066288 (17.06.2010 Gazette 2010/24)**

(54) **CROSS-COUPLING INTERFERENCE CANCELLATION IN MULTIPLE RECEIVE BRANCHES WITH INDEPENDENT DEMODULATION SIGNALS**

KREUZKOPPLUNGS-STÖRUNGSLÖSCHUNG IN MEHREREN EMPFANGSZWEIGEN MIT UNABHÄNGIGEN DEMODULATIONSSIGNALEN

ANNULATION DE PERTURBATIONS PAR COUPLAGE DANS DE MULTIPLES BRANCHES DE RÉCEPTION À SIGNAUX DE DÉMODULATION INDÉPENDANTS

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**12.10.2011 Bulletin 2011/41**

(73) Proprietor: **Telefonaktiebolaget L M Ericsson (PUBL)**
**164 83 Stockholm (SE)**

(72) Inventors:
• **HERBIG, Gerhard Peter**
**71570 Oppenweiler (DE)**
• **BIESTER, Michael**
**71522 Backnang (DE)**

(74) Representative: **Tonscheidt, Andreas et al**
**Ericsson GmbH**
**Patent Department**
**Ericsson Allee 1**
**52134 Herzogenrath (DE)**

(56) References cited:
**EP-A- 1 708 381**

• **LANKL B ET AL: "CROSS-POLARIZATION INTERFERENCE CANCELLATION IN THE PRESENCE OF DELAY EFFECTS" DIGITAL TECHNOLOGY - SPANNING THE UNIVERSE. PHILADELPHIA, JUNE 12 - 15, 1988; [INTERNATIONAL CONFERENCE ON COMMUNICATIONS], NEW YORK, IEEE, US, vol. VOL. 3 OF 3, no. 1988, 12 June 1988 (1988-06-12), pages 1355-1361, XP000042186**
• **LANKL B ET AL: "Fully digital ATDE's and XPIC's for a STM-1 cochannel radio system family" 19890611; 19890611 - 19890614, 11 June 1989 (1989-06-11), pages 1013-1019, XP010081214**
• **BIESTER M ET AL: "Hardware realization of an XPIC system/measurement method and results" EUROPEAN CONFERENCE ON RADIO RELAY SYSTEMS. EDINBURGH, OCT. 11 - 14, 1993; [EUROPEAN CONFERENCE ON RADIO RELAY SYSTEMS], LONDON, IEE, GB, vol. CONF. 4, 1 January 1993 (1993-01-01), pages 255-260, XP006513624 ISBN: 978-0-85296-594-8**

**Description**

Technical Field

The present invention relates to techniques for cross-coupling interference cancellation in multiple receive branches with independent demodulation signals.

Background

It is known to provide radio or microwave receivers which operate on the basis of two orthogonally polarized signals. In such receivers, problems may arise due to cross-polarization interference, i.e. due to signal portions of one polarization being coupled to the other polarization and vice versa. Such a signal may more generally also be referred to as a cross-coupled interference signal. The cross-polarization interference may be due to, e.g. non-ideal antennas or link-related fading phenomena.

One approach to deal with cross-polarization interference is the use of cross-polarization interference cancellation (XPIC) techniques. For example, a receiver for one polarization may be equipped with an XPIC filter which receives a compensation signal from a receiver for the other polarization. By adaptation of the XPIC filter, a filtered compensation signal may be generated which then can be combined with a receive signal so as to cancel signal portions due to cross-polarization interference.

In typical XPIC systems it is necessary that the cross-coupled interference signal and the compensation signal are modulated with the same carrier frequency. Any difference in the carrier frequency will result in performance degradations of the cancellation procedure.

Differences in the carrier frequency can be avoided by using the same demodulation frequency in all receive branches, i.e. for both polarizations. For example, a common oscillator may be used to supply the same demodulation signal to demodulators in the different receive branches. In this case, both receivers use the same demodulation frequency and undesirable differences in the carrier frequency between the cross coupling signal path and the compensation signal path are avoided. However, in practice this concept requires extra cabling and synchronization hardware. This is undesirable in view of costs, especially for outdoor units.

LANKL B ET AL: "CROSS-POLARIZATION INTERFERENCE CANCELLATION IN THE PRESENCE OF DELAY EFFECTS", DIGITAL TECHNOLOGY - SPANNING THE UNIVERSE. PHILADELPHIA, JUNE 12 - 15, 1988; [INTERNATIONAL CONFERENCE ON COMMUNICATIONS], NEW YORK, IEEE, US, vol. VOL. 3 OF 3, no. 1988, 12 June 1988 (1988-06-12), pages 1355-1361, discloses cross-coupling interference cancellation in multiple receive branches with independent demodulation signals.

LANKL B ET AL: "Fully digital ATDE's and XPIC's for a STM-1 cochannel radio system family", 19890611; 19890611 - 19890614, 11 June 1989 (1989-06-11), pages 1013-1019, discloses a fully digital cross-coupling interference cancellation.

Accordingly, there is a need for techniques which allow for efficiently improving the quality of cross-coupling interference cancellation procedures.

**Summary**

According to an embodiment of the invention, a method of receiving data is provided. According to the method a first receive signal is received in a first receive branch. The first receive signal is demodulated on the basis of a first demodulation signal having a first demodulation frequency. Further, a second receive signal is received in a second receive branch. The second receive signal is demodulated on the basis of a second demodulation signal having a second demodulation frequency. A compensation signal is extracted from the first receive signal. The method further includes generating a first digital value, which represents the first demodulation frequency in the second receive branch and generating a second digital value, which represents the second demodulation frequency in the second receive branch. The compensation signal is phase rotated on the basis of the first digital value and second digital value. The second receive signal is combined with the phase rotated first compensation signal.

According to a further embodiment of the invention, a receiver equipment is provided. The receiver equipment includes a first receive branch for receiving a first receive signal. The first receive branch has a first demodulation oscillator configured to supply a first demodulation signal for demodulating the first receive signal. The first demodulation signal has a first demodulation frequency. Further, the receiver equipment includes a second receive branch for receiving a second receive signal. The second receive branch has a second demodulation oscillator configured to supply a second demodulation signal for demodulating the second receive signal. The second demodulation signal has a second demodulation frequency. A compensation branch is provided for extracting a compensation signal from the first receive signal. In the first receive branch, a first frequency counter is provided. The first frequency counter is configured to generate a first digital value, which represents the first demodulation frequency in the second receive branch. In the second receive branch, a second frequency counter is provided. The second frequency counter is configured to generate a second digital value, which represents the second demodulation frequency in the second receive branch. Further, the receiver equipment includes a phase rotating function receiving the first compensation signal to accomplish a phase rotation on the basis of the first digital value and second digital value. A combiner is provided for combining the second receive signal with the phase rotated first compensation signal.

Brief description of the drawings

Fig. 1 schematically illustrates a communication system with multiple receive branches according to an embodiment of the invention.

Fig. 2 schematically illustrates a portion of a first receive branch of the communication system.

Fig. 3 schematically illustrates a portion of a second receive branch of the communication system.

Fig. 4 schematically illustrates a resampling device which may be used in a receive branch according to an embodiment of the invention.

Fig. 5 schematically illustrates a hold generator of the resampling device.

Fig. 6 schematically illustrates a timing recovery unit of the resampling device.

Detailed description of embodiments

In the following, the invention will be explained in more detail by referring to exemplary embodiments which relate to devices and methods for receiving data signals which involve cross-coupling interference cancellation procedures between multiple receive branches.

According to some of the concepts explained in the following, a first receive signal, e.g. corresponding to a first signal polarization, is received in a first receive branch. The first receive signal is demodulated on the basis of a first demodulation signal having a first demodulation frequency. A second receive signal, e.g. corresponding to a second signal polarization orthogonal to the first signal polarization, is received in a second receive branch. The second receive signal is demodulated on the basis of a second demodulation signal having a second demodulation frequency. A first compensation signal is extracted from the first receive signal. A first digital value is generated, which represents the first demodulation frequency in the second receive branch. A second digital value is generated, which represents the second demodulation frequency in the second receive branch. A phase rotation of the first compensation signal is accomplished on the basis of the first digital value and the second digital value. The second receive signal is combined with the phase rotated first compensation signal.

The first compensation signal and the first digital value may be transmitted on the same digital channel from the first receive branch to the second receive branch.

For generating the first digital value, the first demodulation signal may be frequency divided, and for generating the second digital value, the second demodulation signal may be frequency divided.

In addition, a second compensation signal may be extracted from the second receive signal. In this case, generating a third digital value may be generated, which represents the first demodulation frequency in the first receive branch, and a fourth digital value may be generated, which represents the second demodulation frequency in the first receive branch. The second compensation signal may then be phase rotated on the basis of the third digital value and fourth digital value, and the first receive signal may be combined with the phase rotated second compensation signal.

The second compensation signal and the fourth digital value may be transmitted on the same digital channel from the second receive branch to the first receive branch.

For generating the third digital value, the first demodulation signal may be frequency divided, and for generating the fourth digital value, the second demodulation signal may be frequency divided.

A symbol frequency of the second receive signal may transmitted to the first receive branch together with the second compensation signal, e.g. as a local clock signal and a local hold signal of the second receive branch. The first digital value may then be generated in the first receive branch as a ratio including the symbol frequency of the second receive signal, and the second digital value may be generated in the second receive branch as a ratio including to the symbol frequency of the second receive signal.

Further, a symbol frequency of the first receive signal may be transmitted to the second receive branch together with the first compensation signal, e.g. as a local clock signal and a local hold signal of the first receive branch. The third digital value may then be generated in the second receive branch as a ratio including the symbol frequency of the first receive signal, and the fourth digital value may be generated in the first receive branch as a ratio including the symbol frequency of the first receive signal.

According to the above concepts, in a communication system with cross-coupling interference cancellation and exchange of a digital compensation signal, information concerning the frequency of the demodulation signal can be efficiently exchanged using the same digital interface as for the compensation signal. It is merely required to transmit additional data, which can be accomplished on the basis of a comparatively low clock rate. Transmitting the demodulation signal itself, e.g. for accomplishing a synchronization of the demodulation signals in the different receive branches can be avoided.

According to the above concepts, not the demodulation signal itself, which may have a frequency in the range of some GHz, but only information on the value of the frequency value needs to be exchanged. With this information, each of the receive branches may correct any difference modulation between the cross-coupling interference signal path and the compensation path.

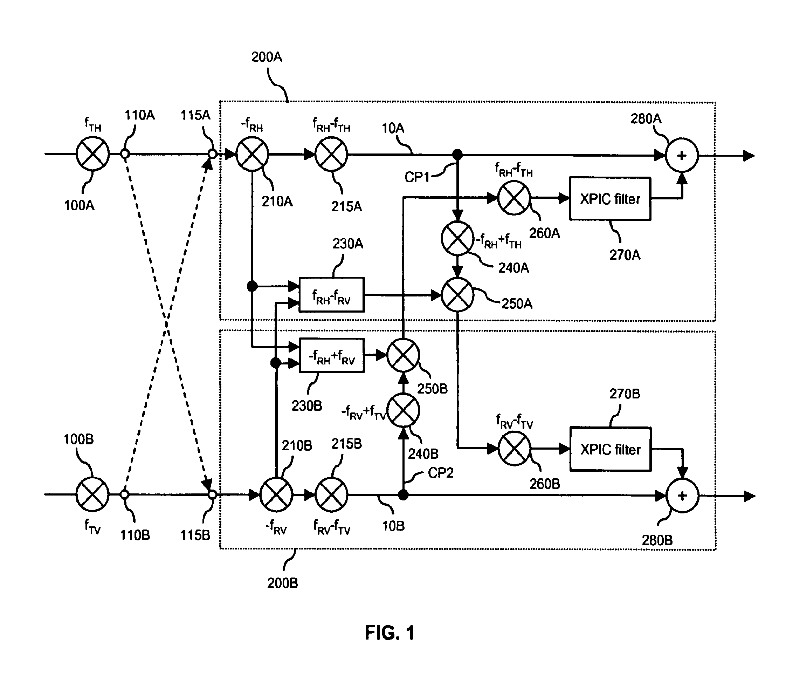

Fig. 1 illustrates signal paths of cross-coupling interference signals and compensation signals in a communication system with multiple receive branches.

In the communication system, a first transmit branch with a first transmit modulator 100A and a second transmit branch with a second transmit modulator 100B are provided. Further, a first receive branch 200A with a first receive demodulator 210A, and second receive branch 200B with a second receive demodulator 210B are provided. It is to be understood, that the first transmit branch and the second transmit branch may correspond to separate hardware units and therefore be regarded as separate transmitters. Similarly, it is to be understood that the first receive branch 200A and the second receive branch 200B may correspond to separate hardware units and therefore be regarded as separate receivers.

In the following, it will be assumed that the first transmit branch and the first receive branch 200A are provided for transferring signals with horizontal polarization, and that the second transmit branch and the second receive branch 200B are provided for transmitting signals with vertical polarization. However, it is to be understood, that other configurations of the different branches could be used as well. For example, the different branches could correspond to different circular polarizations.

From the first transmit branch, a signal with horizontal polarization is transmitted. At the second modulator 100A, the signal is modulated on the basis of a first modulation oscillator signal having a first modulation frequency $f_{TH}$.

From the second transmit branch, a signal with vertical polarization is transmitted. At the second modulator 100B, the signal is modulated on the basis of a second modulation oscillator signal having a second modulation frequency $f_{TV}$.

In the first receive branch 200A, the first demodulator 210A demodulates the received signal on the basis of a first demodulation oscillator signal having a first demodulation frequency $f_{RH}$.

In the second receive branch 200B, the second demodulator 210B demodulates the received signal on the basis of a second demodulation oscillator signal having a second demodulation frequency $f_{RV}$.

A frequency recovery unit 215A of the first receive branch 200A, which accomplishes carrier recovery and synchronization, automatically finds, i.e. estimates, the difference between demodulation and modulation frequency, i.e. the difference $(f_{RH} - f_{TH})$ between the first demodulation frequency $f_{RH}$ and the first modulation frequency $f_{TH}$. This frequency difference is therefore known in the first receive branch 200A. At the output of the frequency recovery unit 215A, a first digital receive signal 10A is provided. The first receive signal has a corresponding digital symbol timing, which includes a digital timing clock and a hold signal indicating valid data symbols (not illustrated).

A frequency recovery unit 215B of the first receive branch 200B, which accomplishes carrier recovery and synchronization, automatically finds, i.e. estimates, the difference between demodulation and modulation frequency, i.e. the difference $(f_{RV} - f_{TV})$ between the second demodulation frequency $f_{RV}$ and the second modulation frequency $f_{TV}$. This frequency difference is therefore known in the second receive branch 200B. At the output of the timing recovery unit 215B, a second digital receive signal 10B is provided. The second digital receive signal 10B has a corresponding digital symbol timing, which includes a digital timing clock and a hold signal indicating valid data symbols (not illustrated).

For example due to antenna imperfections or fading phenomena, crosstalk between the different signal polarizations may occur, i.e. from the vertical to the horizontal polarization and vice versa. In Fig. 1, this is indicated by a dashed arrow between the first transmit branch and the second receive branch 200B, and by a dashed arrow between the second transmit branch and the first receive branch 200A. Therefore, the receiver architecture of Fig. 1 includes a compensation branch with a first XPIC filter 270A and a first summing node 280A in the first receive branch 200A, and a further compensation branch with a second XPIC filter 270B and a second summing node 280B in the second receive branch 200B. A first digital compensation signal CP1 is extracted from the first digital receive signal 10A and combined with the second receive signal by the second XPIC filter 270B and the second summing node 280B. A second digital compensation signal CP2 is extracted from the second digital receive signal 10B and combined with the second receive signal by the first XPIC filter 270B and the first summing node 280B.

A first compensation path thus extends from a diverging point 110A, located in the signal path between the first transmit branch and the first receive branch 200A, via the signal path of the first receive signal 10A and the first compensation signal CP1, to the summing node 280B in the second receive branch 200B. Similarly, a second compensation path extends from a diverging point 110A, located in the signal path between the second transmit branch and the second receive branch 2008, via the signal path of the second receive signal 10B and the second compensation signal CP2, to the summing node 280A in the second receive branch 200A.

A first cross-coupling path extends from the diverging point 110A, located in the signal path between the first transmit branch and the first receive branch 200A, via a merging point 115B, located in the signal path between the second transmit branch and the second receive branch 200B, to the summing node 280B in the second receive branch 200B. Similarly, a second cross-coupling path extends from the diverging point 110B, located in the signal path between the second transmit branch and the second receive branch 200B, via a merging point 115A, located in the signal path between the first transmit branch and the first receive branch 200A, to the summing node 280A in the second receive branch 200A. Here, it is to be noted that the points 110A, 110B, 115A, and 115B merely serve to illustrate the cross-coupling paths and do not imply that the cross-coupling interference signals are actually transmitted between specific physical nodes.

The first and second compensation paths cross an interface between the first receive branch 200A and the second receive branch 200B. Before passing the interface, the first compensation signal CP1 will be phase rotated by the known frequency difference $(-f_{RH} + f_{TH})$, as illustrated at node 240A. After passing the interface the first compensation signal CP1 will be phase rotated by the known frequency difference $(f_{RV} - f_{TV})$, as illustrated at node 260B. Similarly, before passing the interface, the second compensation signal CP2 will be phase rotated by the known frequency difference $(-f_{RV} + f_{TV})$, as illustrated at node 240B. After passing the interface the first compensation signal CP2 will be phase rotated by the known frequency difference $(f_{RH} - f_{TH})$, as illustrated at node 260A. These phase rotations are due to the compensation signals CP1, CP2 being transmitted between different clock domains and cannot be avoided.

A small difference between the accumulated phase rotations over the cross-coupling path and the accumulated phase rotations over the compensation path allows for an efficient cancellation of the cross-coupling interference signal. With increasing difference in the accumulated phase rotations, the quality of cross-coupling interference cancellation degrades.

According to the concepts as described herein, a small difference in the accumulated phase rotations may be achieved by including a phase-rotation correction into the compensation path.

In particular, a phase rotation corresponding to the frequency difference $(f_{RH} - f_{RV})$ may be included into the signal path of the first compensation signal CP1, as illustrated at node 250A. The frequency difference $(f_{RH} - f_{RV})$ is evaluated at node 230A. In this case, the frequency sum over the first cross-coupling path and the frequency sum over the first compensation path both assume a value of $-f_{TV}$:

$$\text{first cross-coupling path:} \qquad -f_{RV} + f_{RV} - f_{TV} = -f_{TV}$$
$$\text{first compensation path:} \qquad -f_{RH} + f_{RH} - f_{TH} - f_{RH} + f_{TH} - f_{RV} + f_{RH} + f_{RV} - f_{TV} = -f_{TV}$$

Similarly, a phase rotation corresponding to the frequency difference $(-f_{RH} + f_{RV})$ may be included into the signal path of the second compensation signal CP2, as illustrated at node 250B. The frequency difference $(-f_{RH} + f_{RV})$ is evaluated at node 230B. In this case, the frequency sum over the second cross-coupling path and the frequency sum over the second compensation path both assume a value of $-f_{TH}$:

$$\text{second cross-coupling path:} \qquad -f_{RH} + f_{RH} - f_{TH} = -f_{TH}$$
$$\text{second compensation path:} \qquad -f_{RV} + f_{RV} - f_{TV} - f_{RV} + f_{TV} - f_{RH} + f_{RV} + f_{RH} - f_{TH} = -f_{TH}$$

In this way, no harsh limits need to be imposed with respect to the tolerances of the modulation and demodulation frequencies $f_{TH}$, $f_{TV}$, $f_{RH}$, and $f_{RV}$. This allows for using independent free-running oscillators for generating the modulation oscillator signals and demodulation oscillator signals.

In the following it will be further explained, how the information concerning the frequencies $f_{RH}$ and $f_{RV}$ of the first and second receive demodulators 210A, 210B may be generated and exchanged in a receiver equipment.

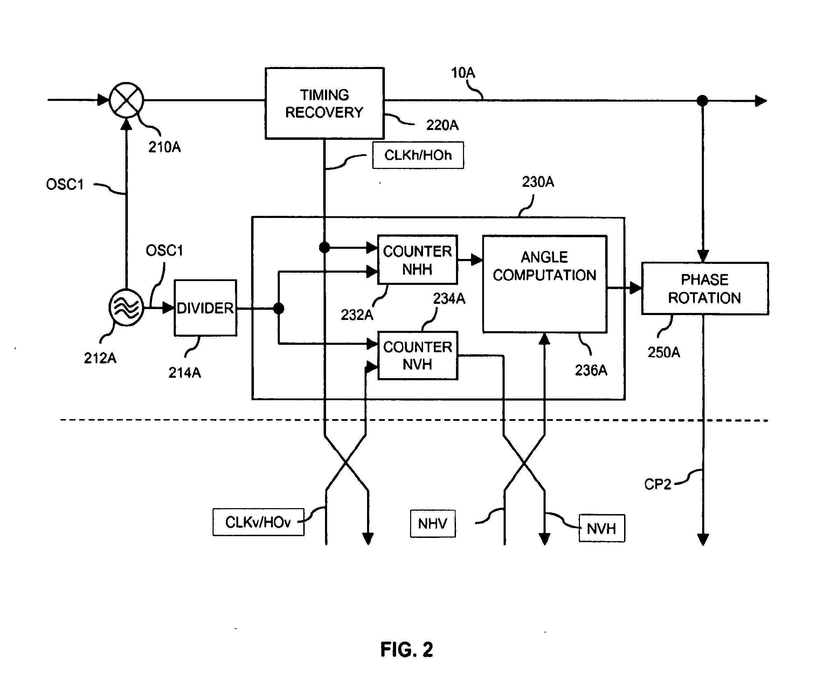

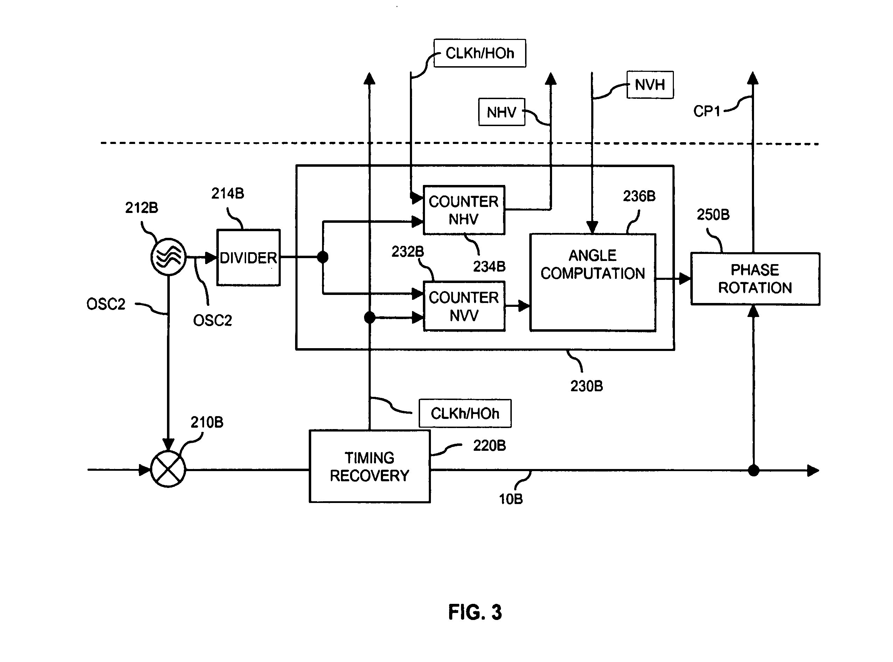

Fig. 2 schematically illustrates a portion of a first receive branch in the receiver equipment, and Fig. 3 schematically illustrates a portion of a second receive branch in the receiver equipment. The first and second receive branches illustrated in Figs. 2 and 3 may be parts of the communication system as illustrated in Fig. 1, i.e. Fig. 2 illustrates the first receive branch 200A and Fig. 3 illustrates the second receive branch 200B. In Figs. 2 and 3, components which

5

are similar to those of Fig. 1 have been designated with the same reference signs. Further explanations concerning these components can be obtained from the corresponding description with respect to Fig. 1. Similarly, further details concerning the components illustrated in Fig. 1 may be taken from the corresponding description with respect to Figs. 2 and 3.

In the receive branches 200A, 200B as illustrated by Figs. 2 and 3, the compensation signals CP1, CP2 are exchanged as digital signals. The digital compensation signals CP1, CP2 are transferred between the different receive branches together with a corresponding clock signal and a corresponding hold signal. Together with the compensation signal CP1, a first local clock signal CLKh of the first receive branch 200A and a first local hold signal HOh of the the first receive branch 200A are transmitted to the second receive branch 200B. Together with the compensation signal CP2, a second local clock signal CLKv of the second receive branch 200B and a second local hold signal HOv of the second receive branch 200B are transmitted to the first receive branch 200A. Therefore, in both receive branches 200A, 200B both local clock signals CLKh, CLKv and both local hold signals HOh and HOv are available. The local clock signals CLKh, CLKv and the local hold signals HOh, HOv are generated by corresponding timing recovery units 220A, 220B. The local hold signals HOh, HOv indicate valid data symbols in corresponding data signals. That is to say, the first local hold signal HOh indicates valid data symbols in the first receive signal 10A and in the first compensation signal CP1, and the second local hold signal HOv indicates valid data symbols in the second receive signal 10B and in the second compensation signal CP2.

The combination of the first local clock signal CLKh and the first local hold signal HOh is a representation of the symbol frequency of the corresponding data signals in the first receive branch 200A. Similarly, the combination of the second local clock signal CLKv and the second local hold signal HOv is a representation of the symbol frequency of the corresponding data signals in the second receive branch 200B. The symbol frequency fSH of the data signals in the first receive branch 200A may be different from the symbol frequency fSV of the data signals in the second receive branch 200B. As a matter of course, the concepts as explained in the following are also valid if the symbol frequencies fSH, fSV are identical.

As illustrated in Fig. 2, the first receive branch 200A includes the receive demodulator 210A, a first demodulation oscillator 212A, a first frequency divider 214A, and a first frequency evaluation block 230A (which corresponds to block 230A of Fig. 1). The frequency evaluation block 230A includes two frequency counters 232A, 234A and an angle computation unit 236A. Further, the first receive branch 200A includes a first phase rotator 250A (which corresponds to node 250A of Fig. 1).

The frequency counter 232A generates a digital value NHH on the basis of the first demodulation signal OSC1 and on the basis of the first symbol frequency fSH, i.e. on the basis of first local clock signal CLKh and the first local hold signal HOh. The frequency counter 234A generates a digital value NVH on the basis of the first demodulation signal OSC1 and on the basis of the first symbol frequency fSV.

The first demodulation signal OSC1 as provided by the first demodulation oscillator 212A is supplied to the first receive demodulator 210A. Further, the first demodulation signal OSC1 is supplied to the first frequency divider 214A. The first frequency divider 214A divides the frequency of the first demodulation signal OSC1 by an appropriate factor, e.g. by a factor of about 1000 to shift the first demodulation frequency from a range of some GHz to a range of some MHz. At lower frequencies, the implementation of the frequency counters 232A, 234A is simplified. In the following, the frequency of the frequency divided first demodulation signal OSC1 will be designated by fOH.

As illustrated in Fig. 3, the second receive branch 200B includes the receive demodulator 210B, a second demodulation oscillator 214B, a second frequency divider 214B, and a second frequency evaluation block 230B (which corresponds to block 230B of Fig. 1). The frequency evaluation block 230B includes two frequency counters 232B, 234B and an angle computation unit 236B. Further, the second receive branch 200B includes a second phase rotator 250B (which corresponds to node 250B of Fig. 1).

The frequency counter 232B generates a digital value NVV on the basis of the second demodulation signal OSC2 and on the basis of the second symbol frequency fSV, i.e. on the basis of the second local clock signal CLKv and the second hold signal HOv. The frequency counter 234B generates a digital value NHV on the basis of the second demodulation signal OSC2 and on the basis of the second symbol frequency fSH.

The second demodulation signal OSC2 as provided by the second demodulation oscillator 212B is supplied to the second receive demodulator 210B. Further, the second demodulation signal OSC2 is supplied to the second frequency divider 214B. The second frequency divider 214B divides the frequency of the second demodulation signal OSC2 by an appropriate factor. In the following, it will be assumed that this factor is the same as the frequency division factor of the first frequency divider 214A. As in the first receive branch 200A, shifting the frequency into a lower range simplifies the implementation of the frequency counters 232B, 234B. In the following, the frequency of the frequency divided second demodulation signal OSC2 will be designated by fOV.

The frequency counter 232A is configured to compute the value NHH as a frequency ratio according to:

$$NHH = fSH / fOH.$$

The frequency counter 234A is configured to compute the value NVH as a frequency ratio according to:

$$NVH = fSV / fOH.$$

The frequency counter 232B is configured to compute the value NVV as a frequency ratio according to:

$$NVV = fSV / fOV.$$

The frequency counter 234 B is configured to compute the value NHV as a frequency ratio according to:

$$NHV = fSH / fOV.$$

As illustrated in Figs. 2 and 3, the digital values NVH and NHV are exchanged between the first and second receive branch 200A, 200B. This can be accomplished using the same digital transmission channels as for the compensation signal CP1, CP2. The additional bandwidth required to transmit the values NVH and NHV is negligible.

The angle computation units 236A, 236B, which may be implemented by hardware, software running on a control processor, or a combination of hardware and software , then compute a rotation phase angle on the basis of the digital values NHH, NVV, NVH, and NHV.

The angle computation unit 236A computes a rotation phase angle $\phi_1$ on the basis of the frequency difference $f_{RH}$-$f_{RV}$, which may be expressed as:

$$fOH - fOV = fSH / NHH - fSH / NHV = fSH (NHV - NHH) / (NHV \cdot NHH).$$

The angle computation unit 236B computes a rotation phase angle $\phi_2$ on the basis of the frequency difference -$f_{RH}$+$f_{RV}$, which may be expressed as:

$$fOV - fOH = fSV / NVV - fSV / NVH = fSV (NVH - NVV) / (NVH \cdot NVV).$$

Accordingly, in both receive branches the above mentioned frequency difference needed for the correction is known relative to the symbol frequency of the same branch.

Standard operations of digital signal processing may then be used to first obtain phase values $\phi_1$, $\phi_2$ from the above frequency difference by incrementing a phase counter with a phase increment $\Delta\phi_1$, $\Delta\phi_2$.

In the first receive branch 200A, the phase value $\phi_1$ at time (n+1) is obtained as a sum of the phase value at time (n) and the phase increment $\Delta\phi_1$:

$$\phi_1(n+1) = \phi_1(n) + \Delta\phi_1,$$

the phase increment $\Delta\phi_1$ being proportional to the frequency difference:

$$\Delta\phi_1 \stackrel{.}{=} 2\pi (fOH - fOV) / fSH = 2\pi (NHV - NHH) / (NHV \cdot NHH).$$

In the second receive branch 200B similar considerations yield:

$$\phi_2(n+1) = \phi_2(n) + \Delta\phi_2,$$

with the phase increment $\Delta\phi_2$ given by:

7

$$\Delta\phi_2 = 2\pi \, (fOV - fOH) \, / \, fSV = 2\pi \, (NVH - NVV) \, / \, (NVH \cdot NVV).$$

Then, the trigonometric functions (Sinus and Cosinus) can be computed from the above phase values and be used in the phase rotators 250A, 250B for accomplishing a phase rotation of the compensation signals CP1, CP2.

Providing the frequency differences $f_{RH}$-$f_{RV}$ and -$f_{RH}$+$f_{RV}$ in the above-mentioned way as relative values allows for an efficient implementation of the phase rotation since the phase the phase counter will be updated at the corresponding symbol rate fSH, fSV.

It is to be understood that if the number of samples per data symbol in the above mentioned data signals, i.e. the receive signals 10A, 10B and the compensation signals CP1, CP2, deviates from one, a corresponding correction factor needs to be introduced in the above calculations. For example, if the compensation signal CP1, CP2 is sampled with two samples per data symbol, the phase increments $\Delta\phi_1$, $\Delta\phi_2$ are to be multiplied with a correction factor of 1/2.

As mentioned above, the two receive branches 200A, 200B may be different hardware units. Accordingly, the receive branches 200A, 200B may belong to different clock domains, e.g. different physical clock-nets having separate clock sources. Further, the symbol frequency fSH and fSV of the receive branches may be different. This has to be considered when exchanging digital data signals between the receive branches, i.e. the compensation signals CP1, CP2 and the digital values NHV, NVH.

In view of the above, each receive branch 200A, 200B may be provided with a resampling device, which interpolates and samples one or more of the incoming data signals, i.e. the incoming compensation signal CP1 or CP2, and/or the incoming digital value NHV or NVH. The resampling device may be associated with nodes 260A, 260B of Fig. 1. A separate resampling device may be provided for each incoming data signal. However, as mentioned above, it is also possible to use the same digital channel for transmitting both the compensation signal CP1 or CP2 and the digital value NHV or NVH in a multiplexed way. In this case, the signals CP1 and NHV may be combined in a single data signal, and the signals CP2 and NVH may be combine in a single data signal. In the following the incoming data signal will be referred to DAT', and the resampled incoming data signal will be referred to as DAT. It is to be understood that in the first receive branch 200A the incoming data signal DAT' may include the digital value NHV and/or the compensation signal CP1, and that in the second receive branch 200B the incoming data signal DAT' may include the digital value NVH and/or the compensation signal CP2.

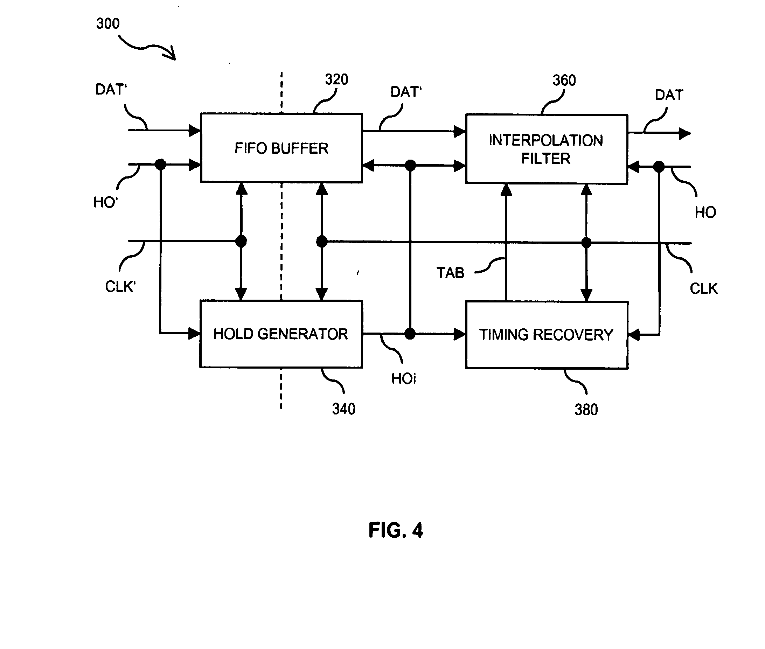

Referring to Figs. 4-6, an exemplary implementation of the resampling device 300 will be explained. The resampling device 300 may be used in the receive branches 200A, 200B of Figs. 1-3. The resampling device 300 is based on an asynchronous sampling concept, which allows for an efficient hardware implementation. In other implementations, synchronous sampling concepts may be used. In the asynchronous sampling concept, the physical clock frequency is slightly higher than necessary, and not every clock edge indicates a new valid data symbol. The sequence of valid data symbols in the data stream is indicated by a hold signal, i.e. the local hold signal HOh as provided by the timing recovery unit 220A, or the local hold signal HOv provided by the timing recovery unit 220B.

An implementation of the resampling device 300 is illustrated in Fig. 4. In this implementation, the resampling device 300 comprises a FIFO ("First In/First Out") buffer 320, a hold generator 340, an interpolation filter 360, and a timing recovery unit 380.

As shown in Fig. 4, the resampling device 300 has an external port with three signals CLK', HO', DAT' and an internal port with three signals CLK, HO, DAT.

At the external port, data is supplied via the incoming data signal DAT'. The data is accompanied by an external clock signal CLK' and, due to the asynchronous nature of the data, by an external hold signal HO'. The external clock signal CLK' and the external hold signal HO' will be formed by the local clock signal CLKh, CLKv and the local hold signal HOh, HOv of the other receive branch 200A, 200B. That is to say, if the resampling device 300 is located in the first receive branch 200A, the external clock signal CLK' will be the local clock signal CLKv of the second receive branch 200B, and the external hold signal HO' will be the local hold signal HOv of the second receive branch 200B. Similarly, if the resampling device 300 is located in the second receive branch 200B, the external clock signal CLK' will be the local clock signal CLKh of the first receive branch 200A, and the external hold signal HO' will be the local hold signal HOh of the first receive branch 200A.

At the internal port, the data is output by as the resampled incoming data signal DAT. Further, a local clock signal CLK and a local hold signal HO are supplied as input signals to the resampling device 300 at the internal port. If the resampling device 300 is located in the first receive branch 200A, the local clock signal CLK will be the local clock signal CLKh of the first receive branch 200A, and the local hold signal HO will be the local hold signal HOh of the first receive branch 200A. Similarly, if the resampling device 300 is located in the second receive branch 200B, the local clock signal CLK will be the local clock signal CLKv of the second receive branch 200B, and the local hold signal HO will be the local hold signal HOv of the second receive branch 200B.

The local clock signal CLK and the local hold signal CH can be considered as reference signals to which the incoming data signal DAT' is synchronized.

The FIFO buffer 320 receives a data symbol at a clock edge of the external clock signal CLK', if the external hold signal HO' indicates a valid data symbol. The FIFO buffer 320 outputs a data symbol at a clock edge of the local clock signal CLK, if a further hold signal HOi indicates that a data symbol is to be retrieved. This further hold signal HOi is generated by the hold generator 340 and is also referred to as an intermediate hold signal.

The hold generator 340 is configured to assure that, on average, the hold signals HO', HOi, indicate the same amount of valid data symbols, irrespective of the different clock signals CLK', CLK used for operating the input and output of the FIFO buffer 320.

Accordingly, in a first stage of the resampling device 300, the valid data symbols of the incoming data signal DAT' are regenerated on the basis of the local clock signal. Otherwise, the incoming data signal DAT' is not changed.

The interpolation filter 360 computes intermediate values from the incoming data signal DAT' as supplied from the FIFO buffer 320. The intermediate values are computed on the basis of a timing phase signal TAB provided by the timing recovery unit 380. The intermediate values are output from the interpolation filter 360 in the resampled incoming data signal DAT. This is accomplished on the basis of the local hold signal HO and the local clock signal CLK, i.e. a data symbol in the resampled incoming data signal DAT is output on a clock edge of the local clock signal CLK if the local hold signal HO indicates a valid data symbol.

The rates of valid data symbols at the input and at the output of the interpolation filter 360 are different and are given by the intermediate hold signal HOi (at the input) and the local hold signal HO (at the output). The intermediate hold signal HOi and the local hold signal HO are supplied as input signals to the timing recovery unit 380. As a further input signal, the timing recovery unit 380 receives the local clock signal CLK.

Accordingly, the timing recovery unit 380 generates the timing phase signal TAB for the interpolation filter 320 on the basis of the intermediate hold signal HOi, the local hold signal HO, and the local clock signal CLK.

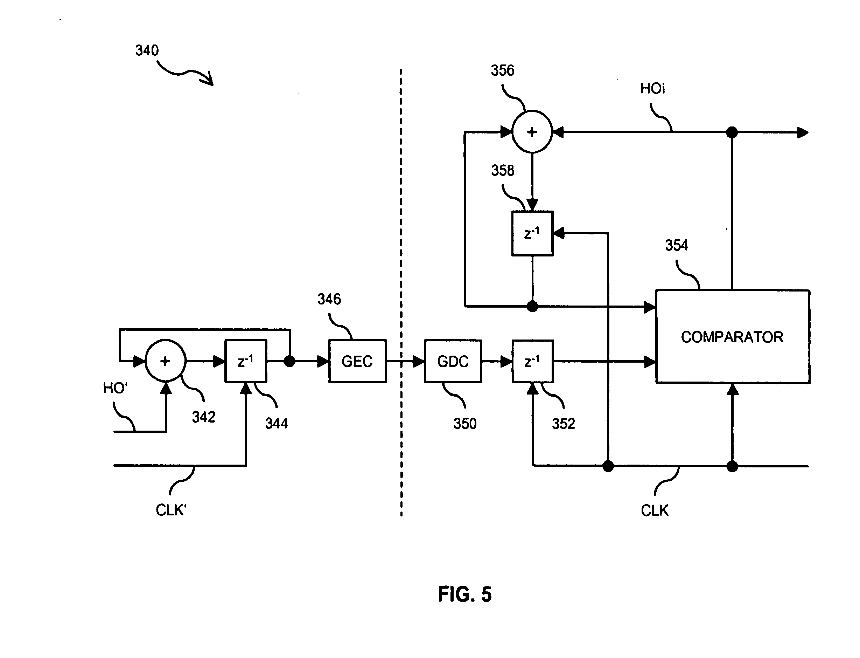

Fig. 5 is a functional diagram schematically illustrating the hold generator 340. As illustrated, the hold generator 340, may include a first modulo counter implemented by a summing node 342 and a data register 344, a second modulo counter implemented by a summing node 356 and a data register 358, a gray-level encoder (GEC) 346, a gray-level decoder (GDC) 350, a further data register 352, and a comparator 354.

In Fig; 5, a vertical dashed line schematically illustrates a border between different clock domains. Components shown on the left side of the vertical dashed line belong to a clock domain of the external clock signal CLK', and components shown on the right side of the vertical dashed line belong to a clock domain of the local clock signal CLK.

In the first modulo counter, the summing node 342 receives the external hold signal HO' at a first input. The data register 342, which is operated on the basis of the external clock signal CLK', receives the output signal of the summing node 342, and a feedback signal is supplied from the output of the data register 344 to a second input of the summing node 342.

The first modulo counter counts the amount of valid data symbols indicated by the external hold signal HO'. The output of the first modulo counter is supplied to the clock domain of the local clock signal CLK using a gray-level encoding/gray-level decoding (GEC/GDC) interface, provided by the gray-level encoder 346, which is located in the clock domain of the external clock signal CLK', followed by the gray-level decoder 350, which is located in the clock domain of the local clock signal CLK. In this way, errors in the counted value, which may occur at the interface between the different clock domains, are limited to +/-1.

The output of the first modulo counter is received in the clock domain of the local clock signal CLK via the GEC/GDC interface and is supplied to the data register 352, which is operated on the basis of the local clock signal CLK. The output signal of the data register 352, is supplied to a first input of the comparator 354. An output signal of the second modulo counter is supplied to a second input of the comparator 354. On the basis of a comparison between the signal supplied to its first input and the signal supplied to its second input, the comparator 354 generates the intermediate hold signal HOi.

In the second modulo counter, the summing node 356 receives the intermediate hold signal HOi at a first input. The data register 358, which is operated on the basis of the local clock signal CLK, receives the output signal of the summing node 356, and a feedback signal is supplied from the output of the data register 358 to a second input of the summing node 356. The second modulo counter counts the amount of valid data symbols indicated by the intermediate hold signal HOi.

Accordingly, the intermediate hold signal HOi is generated on the basis of a comparison between the output signal of the first modulo counter, i.e. the amount of valid data symbols indicated by the external hold signal HO', and the output signal of the second modulo counter, i.e. the amount of valid data symbols indicated by the intermediate hold signal HOi.

The comparator 354 generates the intermediate hold signal HOi in such a way that, on average, the number of valid data symbols indicated by the intermediate hold signal HOi is the same as the number of valid data symbols indicated by the external hold signal HO'. For example, if the first modulo counter outputs a larger value than the second modulo counter, the comparator 354 will generate the intermediate hold signal HOi with a hold value, i.e. a value indicating a valid data symbol. This may be referred to as "pushing" a hold value. Otherwise the intermediate hold signal will be generated without a hold value, which may be referred to as "dropping" a hold value.

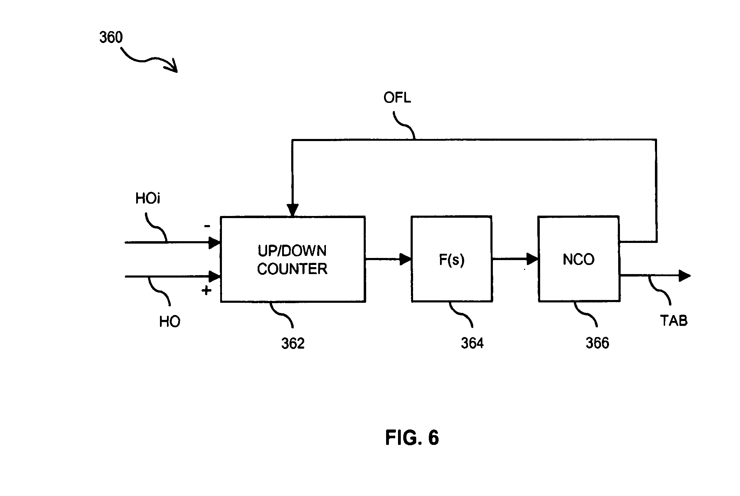

Fig. 6 is a functional diagram schematically illustrating the timing recovery unit 380. As illustrated, the timing recovery unit 380 comprises an up/down counter 362, a loop filter 364, and a number controlled oscillator (NCO) 366.

The local hold signal HO is supplied to a positive first input of the up/down counter 362, and the intermediate hold signal HOi is supplied to a negative second input of the up/down counter 362. Since the local hold signal HO and the intermediate hold signal HOi belong to the same clock domain, i.e. to the clock domain of the local clock signal CLK, they can be compared directly in the up/down counter 362. According to the hold signals HO, HOi, the up/down counter will be incremented or decrernented. That is to say, the up/down counter 362 will be incremented by the local hold signal indicating a valid data symbol, and the up/down counter 362 will be decrernented by the intermediate hold signal HOi indicating a valid data symbol. An output signal of the up/down counter 362 thus corresponds to a rate difference between the local hold signal HO and the intermediate hold signal HOi.

The output signal of the up/down counter is supplied to the loop filter 364, which has a filter function F(s). The filtered output signal of the loop filter 364 is supplied to the number-controlled oscillator 366. In response to its input signal, the number-controlled oscillator 366 produces the timing phase signal TAB, and an overflow signal OFL which is supplied back to the up/down counter 362 as a feedback signal, thereby forming a closed control loop.

The timing phase signal TAB delivered by the number-controlled oscillator 366 is a sequence of timing phases with a constant phase increment from sample to sample. The timing phase signal TAB is used as an input signal of the interpolation filter 360 (Fig. 4). The timing phases indicate time positions at which the interpolated value is to be computed by the interpolation filter 360.

The overflow signal OFL is generated at each zero-phase crossing of the timing phase signal TAB and is supplied to a third input for the up/down counter 362. The sign of the overflow signal OFL, i.e. whether it is used to increment or to decrement the up/down counter, depends on the direction of the zero-phase crossing.

If the rate of valid symbols indicated by the local hold signal HO is different from the rate of valid symbols indicated by the intermediate hold signal HOi, the overflow signal OFL eventually indicates the difference of the rates of the two input hold signals HO, HOi. In the steady-state case, the output of the up/down counter 362 vanishes and the output of the loop filter 364, which is the input of the number-controlled oscillator 366, becomes constant.

Accordingly, the resampling device 300 as explained in connection with Figs. 3-6 allows for efficiently transferring the digital data signals between different clock domains having different digital symbol timings.

In the above concepts, no special hardware, i.e. high-frequency cables or the like, is needed to perform a synchronization of demodulation oscillators. Rather, independent free-running oscillators can be used. The signal processing for the phase rotation correction can be implemented in a digital circuit, e.g. an ASIC ("Application Specific Integrated Circuit"), which can be shared by other digital signal processing functions. Exchanging the digital values can be digitally multiplexed together with the exchange of the compensation signals, which is allows for reusing existing functions.

It is to be understood that the above concepts and examples are merely illustrative and are susceptible to various modifications. For example, various types of different receive branches could be used, e.g. on the basis of different circular polarizations or on the basis of different transmission lines. Further, a cancellation of cross-coupling interference could be implemented only from one receive branch to the other, but not vice versa. Also, it is possible to use various modulation techniques, including amplitude modulation and phase modulation.

**Claims**

1. A method of receiving data, comprising:

   receiving a first receive signal (10A) in a first receive branch (200A), the first receive signal (10A) being demodulated on the basis of a first demodulation signal (OSC1) having a first demodulation frequency ($f_{RH}$);
   receiving a second receive signal (10B) in a second receive branch (200B), the second receive signal (10B) being demodulated on the basis of a second demodulation signal (OSC2) having a second demodulation frequency ($f_{RV}$);
   extracting a first compensation signal (CP1) from the first receive signal (10A);
   generating a first digital value (NVH), which represents the first demodulation frequency ($f_{RH}$) in the second receive branch (200B);
   generating a second digital value (NW), which represents the second demodulation frequency ($f_{RV}$) in the second receive branch (200B);
   phase rotating the first compensation signal (CP1) on the basis of the first digital value (NVH) and second digital value (NW); and

combining the second receive signal (10B) with the phase rotated first compensation signal (CP1).

2. The method according to claim 1, comprising:

transmitting the first compensation signal (CP1) on a first digital channel from the first receive branch (200A) to the second receive branch (200B); and
transmitting the first digital value (NVH) on the first digital channel from the first receive branch (200A) to the second receive branch (200B).

3. The method according to claim 1 or 2,
wherein said generating the first digital value (NVH) comprises frequency dividing the first demodulation signal (OSC1); and
wherein said generating the second digital value (NW) comprises frequency dividing the second demodulation signal (OSC2).

4. The method according to any one of the preceding claims, comprising:

extracting a second compensation signal (CP2) from the second receive signal (10B);
generating a third digital value (NHH), which represents the first demodulation frequency ($f_{RH}$) in the first receive branch (100A);
generating a fourth digital value (NHV), which represents the second demodulation frequency ($f_{RV}$) in the first receive branch (100A);
phase rotating the second compensation signal (CP2) on the basis of the third digital value (NHH) and fourth digital value (NHV); and
combining the first receive signal (10A) with the phase rotated second compensation signal (CP2).

5. The method according to claim 4, comprising:

transmitting the second compensation signal (CP2) on a second digital channel from the second receive branch (200B) to the first receive branch (200A); and
transmitting the fourth digital value (NHV) on the second digital channel from the second receive branch (200A) to the first receive branch (10A).

6. The method according to claim 5,
wherein said generating the third digital value (NHH) comprises frequency dividing the first demodulation signal (OSC1); and
wherein said generating the fourth digital value (NHV) comprises frequency dividing the second demodulation signal (OSC2).

7. The method according to any one of claims 4-6,
wherein a symbol frequency (fSV) of the second receive signal (10B) is transmitted to the first receive branch (200A) together with the second compensation signal (CP2); wherein the first digital value (NVH) is generated in the first receive branch (200A) relative to the symbol frequency (fSV) of the second receive signal (10B); and wherein the second digital value (NVV) is generated in the second receive branch (200B) relative to the symbol frequency (fSV) of the second receive signal (10B).

8. The method according to any one of claims 4-7,
wherein a symbol frequency (fSH) of the first receive signal (10A) is transmitted to the second receive branch (200B) together with the first compensation signal (CP1); wherein the third digital value (NHH) is generated in the first receive branch (200A) relative to the symbol frequency (fSH) of the second receive signal (10B); and wherein the fourth digital value (NHV) is generated in the first receive branch (200A) relative to the symbol frequency (fSH) of the first receive signal (10A).

9. The method according to any one of the preceding claims,
wherein the first receive branch (200A) receives the first receive signal (10A) on the basis of a first signal polarization and the second receive branch (200B) receives the second receive signal (10B) on the basis of a second signal polarization.

**10.** A receiver equipment, comprising:

a first receive branch (200A) for receiving a first receive signal (10A), the first receive branch (200A) having a first demodulation oscillator (212A) configured to supply a first demodulation signal (OSC1) for demodulating the first receive signal (10A), the first demodulation signal (OSC1) having a first demodulation frequency ($f_{RH}$);
a second receive branch (200B) for receiving a second receive signal (10B), the second receive branch (200B) having a second demodulation oscillator (212B) configured to supply a second demodulation signal (OSC2) for demodulating the second receive signal (10B), the second demodulation signal (OSC2) having a second demodulation frequency ($f_{RV}$);
a first compensation branch for extracting a first compensation signal (CP1) from the first receive signal (10A);
a first frequency counter (232A) in the first receive branch (200A), the first frequency counter (232A) being configured to generate a first digital value (NVH), which represents the first demodulation frequency ($f_{RH}$) in the second receive branch (200B);
a second frequency counter (232B) in the second receive branch (200B), the second frequency counter (232B) being configured to generate a second digital value (NVV), which represents the second demodulation frequency ($f_{RV}$) in the second receive branch (200B);
a first phase rotating function (250A) receiving the first compensation signal (CP1) to accomplish a phase rotation on the basis of the first digital value (NVH) and second digital value (NW); and
a first combiner (270B, 280B) for combining the second receive signal (10B)_with the phase rotated first compensation signal (CP1).

**11.** The receiver equipment according to claim 10, comprising:

a first digital channel configured to transmit the first compensation signal (CP1) and the first digital value (NVH) from the first receive branch (200A) to the second receive branch (200B).

**12.** The receiver equipment according to claim 10 or 11, comprising:

a second compensation branch for extracting a second compensation signal (CP2) from the second receive signal (10B);
a third frequency counter (234A) in the first receive branch (200A), the third frequency counter (234A) being configured to generate a third digital value (NHH), which represents the first demodulation frequency ($f_{RH}$) in the first receive branch (200A);
a fourth frequency counter (234B) in the second receive branch (200B), the fourth frequency counter (234B) being configured to generate a fourth digital value (NHV), which represents the second demodulation frequency ($f_{RV}$) in the first receive branch (200A);
a second phase rotating function (250B) receiving the second compensation signal (CP2) to accomplish a phase rotation on the basis of the third digital value (NHH) and fourth digital value (NHV); and
a second combiner (270A, 280A) for combining the first receive signal (10A) with the phase rotated second compensation signal (CP2).

**13.** The receiver equipment according to claim 12, comprising:

a second digital channel configured to transmit the second compensation signal (CP2) and the fourth digital value (NHV) from the second receive branch (200B) to the first receive branch (200A).

**14.** The receiver equipment according to any one of claims 10-13, comprising:

a first frequency divider (214A) for frequency dividing the first demodulation signal (OSC1); and
a second frequency divider (214B) for frequency dividing the second demodulation signal (OSC2).

**15.** The receiver equipment according to any one of claims 10 to 14,
wherein the receiver equipment is configured to perform the method according to any one of claims 1 to 9.

**Patentansprüche**

**1.** Verfahren zum Empfangen von Daten, umfassend:

Empfangen eines ersten Empfangssignals (10A) in einem ersten Empfangszweig (200A), wobei das erste Empfangssignal (10A) auf der Basis eines ersten Demodulationssignals (OSC1) mit einer ersten Demodulationsfrequenz ($f_{RH}$) demoduliert wird;

Empfangen eines zweiten Empfangssignals (10B) in einem zweiten Empfangszweig (200B), wobei das zweite Empfangssignal (10B) auf der Basis eines zweiten Demodulationssignals (OSC2) mit einer zweiten Demodulationsfrequenz ($f_{RV}$) demoduliert wird;

Extrahieren eines ersten Kompensationssignals (CP1) aus dem ersten Empfangssignal (10A);

Erzeugen eines ersten Digitalwerts (NVH), welcher die erste Demodulationsfrequenz ($f_{RH}$) im zweiten Empfangszweig (200B) darstellt;

Erzeugen eines zweiten Digitalwerts (NVV), welcher die zweite Demodulationsfrequenz ($f_{RV}$) im zweiten Empfangszweig (200B) darstellt;

Rotieren der Phase des ersten Kompensationssignals (CP1) auf der Basis des ersten Digitalwerts (NVH) und des zweiten Digitalwerts (NVV); und

Verknüpfen des zweiten Empfangssignals (10B) mit dem phasenrotierten ersten Kompensationssignal (CP1).

2. Verfahren nach Anspruch 1, umfassend:

Übertragen des ersten Kompensationssignals (CP1) auf einem ersten Digitalkanal vom ersten Empfangszweig (200A) an den zweiten Empfangszweig (200B); und

Übertragen des ersten Digitalwerts (NVH) auf dem ersten Digitalkanal vom ersten Empfangszweig (200A) an den zweiten Empfangszweig (200B).

3. Verfahren nach Anspruch 1 oder 2,
wobei das Erzeugen des ersten Digitalwerts (NVH) ein Teilen der Frequenz des ersten Demodulationssignals (OSC1) umfasst; und
wobei das Erzeugen des zweiten Digitalwerts (NVV) ein Teilen der Frequenz des zweiten Demodulationssignals (OSC2) umfasst.

4. Verfahren nach einem der vorhergehenden Ansprüche, umfassend:

Extrahieren eines zweiten Kompensationssignals (CP2) aus dem zweiten Empfangssignal (10B);

Erzeugen eines dritten Digitalwerts (NHH), welcher die erste Demodulationsfrequenz ($f_{RH}$) im ersten Empfangszweig (100A) darstellt;

Erzeugen eines vierten Digitalwerts (NHV), welcher die zweite Demodulationsfrequenz ($f_{RV}$) im ersten Empfangszweig (100A) darstellt;

Rotieren der Phase des zweiten Kompensationssignals (CP2) auf der Basis des dritten Digitalwerts (NHH) und des vierten Digitalwerts (NHV); und

Verknüpfen des ersten Empfangssignals (10A) mit dem phasenrotierten zweiten Kompensationssignal (CP2).

5. Verfahren nach Anspruch 4, umfassend:

Übertragen des zweiten Kompensationssignals (CP2) auf einem zweiten Digitalkanal vom zweiten Empfangszweig (200B) an den ersten Empfangszweig (200A); und

Übertragen des vierten Digitalwerts (NHV) auf dem zweiten Digitalkanal vom zweiten Empfangszweig (200B) an den ersten Empfangszweig (200A).

6. Verfahren nach Anspruch 5,
wobei das Erzeugen des dritten Digitalwerts (NHH) ein Teilen der Frequenz des ersten Demodulationssignals (OSC1) umfasst; und
wobei das Erzeugen des vierten Digitalwerts (NHV) ein Teilen der Frequenz des zweiten Demodulationssignals (OSC2) umfasst.

7. Verfahren nach einem der Ansprüche 4 bis 6,
wobei eine Symbolfrequenz ($f_{SV}$) des zweiten Empfangssignals (10B) zusammen mit dem zweiten Kompensationssignal (CP2) an den ersten Empfangszweig (200A) übertragen wird;
wobei der erste Digitalwert (NVH) im ersten Empfangszweig (200A) in Bezug auf die Symbolfrequenz ($f_{SV}$) des zweiten Empfangssignals (10B) erzeugt wird; und
wobei der zweite Digitalwert (NVV) im zweiten Empfangszweig (200B) in Bezug auf die Symbolfrequenz ($f_{SV}$) des

zweiten Empfangssignals (10B) erzeugt wird.

8. Verfahren nach einem der Ansprüche 4 bis 7,
wobei eine Symbolfrequenz (fSH) des ersten Empfangssignals (10A) zusammen mit dem ersten Kompensationssignal (CP1) an den zweiten Empfangszweig (200B) übertragen wird;
wobei der dritte Digitalwert (NHH) im ersten Empfangszweig (200A) in Bezug auf die Symbolfrequenz (fSH) des zweiten Empfangssignals (10B) erzeugt wird;
und
wobei der vierte Digitalwert (NHV) im ersten Empfangszweig (200A) in Bezug auf die Symbolfrequenz (fSH) des ersten Empfangssignals (10A) erzeugt wird.

9. Verfahren nach einem der vorhergehenden Ansprüche,
wobei der erste Empfangszweig (200A) das erste Empfangssignal (10A) auf der Basis einer ersten Signalpolarisation empfängt, und der zweite Empfangszweig (200B) das zweite Empfangssignal (10B) auf der Basis einer zweiten Signalpolarisation empfängt.

10. Empfängereinrichtung, umfassend:

einen ersten Empfangszweig (200A) zum Empfangen eines ersten Empfangssignals (10A), wobei der erste Empfangszweig (200A) einen ersten Demodulationsoszillator (212A) aufweist, der so konfiguriert ist, dass er ein erstes Demodulationssignal (OSC1) zum Demodulieren des ersten Empfangssignals (10A) liefert, wobei das erste Demodulationssignal (OSC1) eine erste Demodulationsfrequenz ($f_{RH}$) aufweist;
einen zweiten Empfangszweig (200B) zum Empfangen eines zweiten Empfangssignals (10B), wobei der zweite Empfangszweig (200B) einen zweiten Demodulationsoszillator (212B) aufweist, der so konfiguriert ist, dass er ein zweites Demodulationssignal (OSC2) zum Demodulieren des zweiten Empfangssignals (10B) liefert, wobei das zweite Demodulationssignal (OSC2) eine zweite Demodulationsfrequenz ($f_{RV}$) aufweist;
einen ersten Kompensationszweig zum Extrahieren eines ersten Kompensationssignals (CP1) aus dem ersten Empfangssignal (10A);
einen ersten Frequenzzähler (232A) im ersten Empfangszweig (200A), wobei der erste Frequenzzähler (232A) so konfiguriert ist, dass er einen ersten Digitalwert (NVH) erzeugt, welcher die erste Demodulationsfrequenz ($f_{RH}$) im zweiten Empfangszweig (200B) darstellt;
einen zweiten Frequenzzähler (232B) im zweiten Empfangszweig (200B), wobei der zweite Frequenzzähler (232B) so konfiguriert ist, dass er einen zweiten Digitalwert (NVV) erzeugt, welcher die zweite Demodulationsfrequenz ($f_{RV}$) im zweiten Empfangszweig (200B) darstellt;
eine erste Phasenrotationsfunktion (250A), die das erste Kompensationssignal (CP1) empfängt, um eine Phasenrotation auf der Basis des ersten Digitalwerts (NVH) und des zweiten Digitalwerts (NVV) zu erreichen; und
einen ersten Verknüpfer (270B, 280B) zum Verknüpfen des zweiten Empfangssignals (10B) mit dem phasenrotierten ersten Kompensationssignal (CP1).

11. Empfängereinrichtung nach Anspruch 10, umfassend:

einen ersten Digitalkanal, der so konfiguriert ist, dass er das erste Kompensationssignal (CP1) und den ersten Digitalwert (NVH) vom ersten Empfangszweig (200A) an den zweiten Empfangszweig (200B) überträgt.

12. Empfängereinrichtung nach Anspruch 10 oder 11, umfassend:

einen zweiten Kompensationszweig zum Extrahieren eines zweiten Kompensationssignals (CP2) aus dem zweiten Empfangssignal (10B);
einen dritten Frequenzzähler (234A) im ersten Empfangszweig (200A), wobei der dritte Frequenzzähler (234A) so konfiguriert ist, dass er einen dritten Digitalwert (NHH) erzeugt, welcher die erste Demodulationsfrequenz ($f_{RH}$) im ersten Empfangszweig (200A) darstellt;
einen vierten Frequenzzähler (234B) im zweiten Empfangszweig (200B), wobei der vierte Frequenzzähler (234B) so konfiguriert ist, dass er einen vierten Digitalwert (NHV) erzeugt, welcher die zweite Demodulationsfrequenz ($f_{RV}$) im ersten Empfangszweig (200A) darstellt;
eine zweite Phasenrotationsfunktion (250B), die das zweite Kompensationssignal (CP2) empfängt, um eine Phasenrotation auf der Basis des dritten Digitalwerts (NHH) und des vierten Digitalwerts (NHV) zu erreichen; und
einen zweiten Verknüpfer (270A, 280A) zum Verknüpfen des ersten Empfangssignals (10A) mit dem phasenrotierten zweiten Kompensationssignal (CP2).

**13.** Empfängereinrichtung nach Anspruch 12, umfassend:

einen zweiten Digitalkanal, der so konfiguriert ist, dass er das zweite Kompensationssignal (CP2) und den vierten Digitalwert (NHV) vom zweiten Empfangszweig (200B) an den ersten Empfangszweig (200A) überträgt.

**14.** Empfängereinrichtung nach einem der Ansprüche 10 bis 13, umfassend:

einen ersten Frequenzteiler (214A) zum Teilen der Frequenz des ersten Demodulationssignals (OSC1); und
einen zweiten Frequenzteiler (214B) zum Teilen der Frequenz des zweiten Demodulationssignals (OSC2).

**15.** Empfängereinrichtung nach einem der Ansprüche 10 bis 14,
wobei die Empfängereinrichtung so konfiguriert ist, dass sie das Verfahren nach einem der Ansprüche 1 bis 9 ausführt.

## Revendications

**1.** Procédé de réception de données, comprenant de :

recevoir un premier signal de réception (10A) dans une première branche de réception (200A), le premier signal de réception (10A) étant démodulé sur la base d'un premier signal de démodulation (OSC1) ayant une première fréquence de démodulation ($f_{RH}$) ;
recevoir un second signal de réception (10B) dans une seconde branche de réception (200B), le second signal de réception (10B) étant démodulé sur la base d'un second signal de démodulation (OSC2) ayant une seconde fréquence de démodulation ($f_{RV}$) ;
extraire un premier signal de compensation (CP1) du premier signal de réception (10A) ;
générer une première valeur numérique (NVH) qui représente la première fréquence de démodulation ($f_{RH}$) dans la seconde branche de réception (200B) ;
générer une seconde valeur numérique (NVV) qui représente la seconde fréquence de démodulation ($f_{RV}$) dans la seconde branche de réception (200B) ;
effectuer une rotation de phase du premier signal de compensation (CP1) sur la base de la première valeur de numérique (NVH) et de la seconde valeur numérique (NVV) ; et
combiner le second signal de réception (10B) avec le premier signal de compensation (CP1) soumis à la rotation de phase.

**2.** Procédé selon la revendication 1, comprenant de :

transmettre le premier signal de compensation (CP1) sur un premier canal numérique de la première branche de réception (200A) à la seconde branche de réception (200B) ; et
transmettre la première valeur numérique (NVH) sur le premier canal numérique de la première branche de réception (200A) à la seconde branche de réception (200B).

**3.** Procédé selon la revendication 1 ou 2,
dans lequel ladite génération de la première valeur numérique (NVH) comprend de diviser la fréquence du premier signal de démodulation (OSC1) ; et
dans lequel ladite génération de la seconde valeur numérique (NVV) comprend de diviser la fréquence du second signal de démodulation (OSC2).

**4.** Procédé selon une quelconque des revendications précédentes, comprenant de :

extraire un second signal de compensation (CP2) du second signal de réception (10B) ;
générer une troisième valeur numérique (NHH) qui représente la première fréquence de démodulation ($f_{RH}$) dans la première branche de réception (100A) ;
générer une quatrième valeur numérique (NHV) qui représente la seconde fréquence de démodulation ($f_{RV}$) dans la première branche de réception (100A) ;
effectuer une rotation de phase du second signal de compensation (CP2) sur la base de la troisième valeur numérique (NHH) et de la quatrième valeur numérique (NHV) ; et
combiner le premier signal de réception (10A) avec le second signal de compensation (CP2) soumis à la rotation de phase.

**5.** Procédé selon la revendication 4, comprenant de :

transmettre le second signal de compensation (CP2) sur un second canal numérique de la seconde branche de réception (200B) à la première branche de réception (200A) ; et
transmettre la quatrième valeur numérique (NHV) sur le second canal numérique de la seconde branche de réception (200B) à la première branche de réception (200A).

**6.** Procédé selon la revendication 5,
dans lequel ladite génération de la troisième valeur numérique (NHH) comprend de diviser la fréquence du premier signal de démodulation (OSC1) ; et
dans lequel ladite génération de la quatrième valeur numérique (NHV) comprend de diviser la fréquence du second signal de démodulation (OSC2).

**7.** Procédé selon une quelconque des revendications 4 à 6, dans lequel une fréquence de symbole (fSV) du second signal de réception (10B) est transmise à la première branche de réception (200A) conjointement avec le second signal de compensation (CP2) ;
dans lequel la première valeur numérique (NVH) est générée dans la première branche de réception (200A) relativement à la fréquence de symbole (fSV) du second signal de réception (10B) ; et
dans lequel la seconde valeur numérique (NVV) est générée dans la seconde branche de réception (200B) relativement à la fréquence de symbole (fSV) du second signal de réception (10B).

**8.** Procédé selon une quelconque des revendications 4 à 7,
dans lequel une fréquence de symbole (fSH) du premier signal de réception (10A) est transmise à la seconde branche de réception (200B) conjointement avec le premier signal de compensation (CP1) ;
dans lequel la troisième valeur numérique (NHH) est générée dans la première branche de réception (200A) relativement à la fréquence de symbole (fSH) du second signal de réception (10B) ; et
dans lequel le quatrième signal numérique (NHV) est généré dans la première branche de réception (200A) relativement à la fréquence de symbole (fSH) du premier signal de réception (10A).

**9.** Procédé selon une quelconque des revendications précédentes,
dans lequel la première branche de réception (200A) reçoit le premier signal de réception (10A) sur la base d'une première polarisation de signal et la seconde branche de réception (200B) reçoit le second signal de réception (10B) sur la base d'un second signal de polarisation.

**10.** Equipement de récepteur, comprenant :

une première branche de réception (200A) pour recevoir un premier signal de réception (10A), la première branche de réception (200A) ayant un premier oscillateur de démodulation (212A) configuré pour fournir un premier signal de démodulation (OSC1) pour démoduler le premier signal de réception (10A), le premier signal de démodulation (OSC1) ayant une première fréquence de démodulation ($f_{RH}$) ;
une seconde branche de réception (200B) pour recevoir un second signal de réception (10B), la seconde branche de réception (200B) ayant un second oscillateur de démodulation (212B) configuré pour fournir un second signal de démodulation (OSC2) pour démoduler le second signal de réception (10B), le second signal de démodulation (OSC2) ayant une seconde fréquence de démodulation ($f_{RV}$) ;
une première branche de compensation pour extraire un premier signal de compensation (CP1) du premier signal de réception (10A) ;
un premier compteur de fréquence (232A) dans la première branche de réception (200A), le premier compteur de fréquence (232A) étant configuré pour générer une première valeur numérique (NVH), qui représente la première fréquence de démodulation ($f_{RH}$) dans la seconde branche de réception (200B) ;
un second compteur de fréquence (232B) dans la seconde branche de réception (200B), le second compteur de fréquence (232B) étant configuré pour générer une seconde valeur numérique (NVV), qui représente la seconde fréquence de démodulation ($f_{RV}$) dans la seconde branche de réception (200B) ;
une première fonction de rotation de phase (250A) recevant le premier signal de compensation (CP1) pour accomplir une rotation de phase sur la base de la première valeur numérique (NVH) et la seconde valeur numérique (NVV) ; et
un premier combinateur (270B, 280B) pour combiner le second signal de réception (10B) avec le premier signal de compensation (CP1) soumis à la rotation de phase.

**11.** Equipement de récepteur selon la revendication 10, comprenant :

un premier canal numérique configuré pour transmettre le premier signal de compensation (CP1) et la première valeur numérique (NVH) de la première branche de réception (200A) à la seconde branche de réception (200B).

**12.** Equipement de récepteur selon les revendications 10 ou 11, comprenant :

une seconde branche de compensation pour extraire un second signal de compensation (CP2) du second signal de réception (10B) ;
un troisième compteur de fréquence (234A) dans la première branche de réception (200A), le troisième compteur de fréquence (234A) étant configuré pour générer une troisième valeur numérique (NHH), qui représente la première fréquence de démodulation ($f_{RH}$) dans la première branche de réception (200A) ;
un quatrième compteur de fréquence (234B) dans la seconde branche de réception (200B), le quatrième compteur de fréquence (234B) étant configuré pour générer une quatrième valeur numérique (NHV) qui représente la seconde fréquence de démodulation ($f_{RV}$) dans la première branche de réception (200A) ;
une seconde fonction de rotation de phase (250B) recevant le second signal de compensation (CP2) pour accomplir une rotation de phase sur la base de la troisième valeur numérique (NHH) et la quatrième valeur numérique (NHV) ; et
un second combinateur (270A, 280A) pour combiner le premier signal de réception (10A) avec le second signal de compensation (CP2) soumis à la rotation de phase.

**13.** Equipement de récepteur selon la revendication 12, comprenant :

un second canal numérique configuré pour transmettre le second signal de compensation (CP2) et la quatrième valeur numérique (NHV) de la seconde branche de réception (200B) à la première branche de réception (200A).

**14.** Equipement de réception selon une quelconque des revendications 10 à 13, comprenant :

un premier diviseur de fréquence (214A) pour diviser la fréquence du premier signal de démodulation (OSC1) ; et
un second diviseur de fréquence (214B) pour diviser la fréquence du second signal de démodulation (OSC2).

**15.** Equipement de récepteur selon une quelconque des revendications 10 à 14,
dans lequel l'équipement de récepteur est configuré pour mettre en oeuvre le procédé selon une quelconque des revendications 1 à 9.

FIG. 1

**FIG. 2**

EP 2 374 217 B1

FIG. 3

FIG. 4

FIG. 5

EP 2 374 217 B1

EP 2 374 217 B1

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LANKL B et al.** CROSS-POLARIZATION INTERFERENCE CANCELLATION IN THE PRESENCE OF DELAY EFFECTS. *DIGITAL TECHNOLOGY - SPANNING THE UNIVERSE. PHILADELPHIA,* 12 June 1988, vol. 3 (1988), 1355-1361

- **LANKL B et al.** *Fully digital ATDE's and XPIC's for a STM-1 cochannel radio system family,* 11 June 1989, 1013-1019